# EUROPEAN PATENT APPLICATION

(11) **EP 3 530 624 A1**
(43) Date of publication of application: **28.08.2019**
(21) Application number: 19153943.6
(22) Date of filing: 27.03.2007
(51) Int. Cl.: C01F 11/18, C09C 1/02, C09C 3/04, D21H 19/38

(54) **METHOD FOR PRODUCING PARTICULATE INORGANIC MATERIAL**

(30) Priority: 27.03.2006 GB 0606080
(62) Divisional of application: 07732181.8
(71) Applicant: FiberLean Technologies Limited, Par, Cornwall PL24 2SQ (GB)
(72) Inventor: Kostuch, Jacek Antoni, Coombe, Cornwall PL26 7LF (GB); Payton, Desmond Charles, Austell, Cornwall PL25 3UR (GB)
(74) Representative: EDP Patent Attorneys B.V.

(57) **Abstract**

Disclosed herein are methods for producing a particulate mineral material having a desired particle size distribution, including processing the mineral material at a first location, stabilizing the processed mineral, transporting the stabilized processed mineral to a second location; and further processing the stabilized processed mineral material at the second location to a desired particle size distribution.

## Description

This invention concerns an improved process for producing particulate inorganic materials, such as calcium carbonate pigments in which a feed of the inorganic material, such as calcium carbonate, is subjected to a preliminary processing, typically a grinding step, at a first location, to reduce the particle size to a degree of fineness such that at least 5% of the particles are smaller than 2 microns, and to a secondary processing, typically a grinding step, at a second location remote from the first location, to a desired degree of fineness, such as required for an end use.

Previously, natural inorganic materials, such as calcium carbonate pigments have generally been ground at a central location to produce the relatively large number of different end products that are needed to meet the needs of different end-users. However, this method suffers from disadvantages, such as the need for additional processing equipment to simultaneously produce many different products. Further, the need to transport and store excess amounts of each of a large number of products introduces warehousing and logistical inefficiencies that can result in significant cost.

Accordingly, the need has now arisen for a more efficient method of producing a number of processed mineral products having different particle size distributions.

In one aspect, the present invention provides a more efficient method for producing a number of differing processed mineral products from a feed by processing (e.g. grinding) the feed to produce a standardized product that can be split and shipped to a plurality of locations proximate to end-users, for additional processing to produce multiple final products having characteristics tailored to the needs of each end-user.

According to a first aspect of the present invention, there is provided a process for producing a particulate calcium carbonate having a desired particle size distribution, comprising:
(a) processing a calcium carbonate feed at a first location to produce a first processed calcium carbonate having a particle size distribution ranging from about 5% less than 2 microns to about 75% less than 2 microns;
(b) stabilizing the first processed calcium carbonate;
(c) transporting the stabilized processed calcium carbonate to a second location; and
(d) further processing the stabilized processed calcium carbonate at the second location to produce a particulate calcium carbonate having a desired particle size distribution.

The present invention is also applicable for other natural inorganic materials, including other alkaline earth metal carbonates and also other inorganic materials such as kaolin or talc.

In aspects of the invention, the processing of the calcium carbonate in step (a) is grinding. In step (c), some or all of the stabilized processed calcium carbonate may be transported to a second location. The processing in step (d) may include further grinding, or may include a treatment in which the stabilized material is chemically treated at the second location to alter its functionality, for example with a dispersant, surface modification agent such as a silane, a dye, or a temporary structure giving compound such as carboxy methylcellulose, or may be subjected to charge neutralization. The processing may include blending with an additional inorganic material such as kaolin or talc or another alkaline earth metal carbonate having a different particle size distribution, such as calcium carbonate, e.g. precipitated calcium carbonate. Step (d) may include further grinding of the inorganic material in conjunction with the blending of an additional inorganic material. Where an additional inorganic material is to be blended, this may be accomplished by co-grinding the primary inorganic material with the additional inorganic material.

According to a further aspect of the present invention, the particulate calcium carbonate having a desired particle size distribution may be further processed to form a final product selected from one or more of paper products, including fillers and coating formulations, inks, rubber products, paint compositions (including matt and glossy paint), polymer products, ceramics, barrier coatings. The term paper products should be understood to mean all forms of paper, including board, card, paperboard, and the like.

Hereafter, the invention will be discussed in terms of a calcium carbonate feed, and in relation to aspects where the calcium carbonate is processed by grinding. The invention should not be construed as being limited to such embodiments.

The present invention has a number of advantages, in addition to the advantages of cost noted above, which are associated with the reduction of additional processing equipment and the avoidance of the need to transport and store excess amounts of each of a large number of products. For example, the invention may provide a more efficient method of producing a number of processed mineral products having different particle size distributions, which are adapted for different customer needs. A further advantage of cost results because some of the grinding costs are deferred to the second location, where energy costs may be cheaper, as for example in a paper mill. Another advantage is that there may be a reduction of the agent which is used to stabilize the calcium carbonate for transport. This in turn may lead to a reduction in the need for biocide, since a reduction in the amount of dispersant (which may function as an energy source for microorganisms) leads to a product which is less susceptible to degradation by microorganism.

In one aspect, the first location is nearer to a source of the calcium carbonate feed and the second location is nearer to an end-user site. For example, the first location can be a central processing site disposed in a location relatively near to a source of calcium carbonate feed such as a marble mine, a limestone quarry or the like. Similarly, the second location can be at a site nearer the end-user such as, for example, at a transshipping facility at a port, a rail-yard or trucking depot. It may even be desirable to locate the second processing site directly at an end-user facility such as at a paper mill.

The grinding at each of the first and second locations is carried out on an industrial scale, for example at least 1 tonne per hour of carbonate to be ground, or at least 10 tonnes per hour of carbonate to be ground.

The first location may be located not more than about 100 km from the source of the calcium carbonate feed, e.g. not more than about 50 km from the source of the calcium carbonate feed, e.g. not more than about 20 km from the source of the calcium carbonate feed, e.g. not more than about 10 km from the source of the calcium carbonate feed. However, it is to be understood that, in principle, the first location may itself be geographically remote from the source of the feed material, as for example if the source of feed material is in a first country from which it is shipped to a location in a second country where the preliminary processing takes place.

In another aspect, the second location may be not more than about 100 km from the end-user site, e.g. not more than about 50 km from the source of the calcium carbonate feed, e.g. not more than about 20 km from the source of the calcium carbonate feed, e.g. not more than about 10 km from the source of the calcium carbonate feed.

The first and second locations may be located at least 20km apart, for example at least 50km apart, for example at least 100km apart, or at least 200km apart, or at least 300km apart, or at least 400km apart or at least 500km apart.

In an embodiment of the invention, there may be a plurality of different second locations to which portions of the product processed at the first location is transported, for further processing. The same or different degrees of further processing may be accomplished at each second location. Each of said second locations may, for example, be located at least 20km apart, for example at least 50km apart, for example at least 100km apart, or at least 200km apart, or at least 300km apart, or at least 400km apart or at least 500km apart.

The grinding in (a) and (d) may include either high or low solids grinding routes in accordance with the different aspects of the present invention.

Generally, calcium carbonate can be ground in the wet state or in the dry state. In the wet state, the calcium carbonate can be ground either as an aqueous suspension having a high solids content, for example from about 70 to 80% by weight of dry solids, or as an aqueous suspension having a relatively low solids content, for example less than 40% by weight of dry solids.

The high solids content route has the advantage that less water is used to suspend the pigment, and therefore little or no water has to be removed from the ground pigment for transport and sale. In fact, in many cases the ground calcium carbonate pigment is transported and sold in the form of a concentrated suspension, and this high solids route produces a suspension which is directly suitable for this purpose without further treatment. A dispersing agent for the calcium carbonate pigment is often also used in this route.

The low solids route has the advantage that no dispersing agent for the pigment is required, but it is found that the grinding efficiency is relatively low. The route has the further disadvantage that a large quantity of water has to be separated from the pigment before the pigment can economically be transported and sold.

The stabilizing in (b) can include any method for making the first calcium carbonate from (a) substantially resistant to settling or segregation for a period sufficient for transport from the first location to the second location.

In one aspect, the stabilizing in (b) includes dewatering the first ground calcium carbonate to a solid or semi-solid (i.e., lump) form via conventional dewatering means. For example, the first calcium carbonate can be dried to solid or semi-solid state by filtration, such as for example by use of a tube press. In another aspect, the dewatering in (b) may include evaporation via conventional evaporation means, such as for example a rotary or vacuum evaporator.

In another aspect, the stabilizing in (b) includes adding at least one dispersant to the first ground calcium carbonate. In one aspect, the at least one dispersant may be an inorganic dispersant such as a silicate or a phosphate-based dispersant, e.g. sodium hexametaphosphate or TSPP. In another aspect, the at least one dispersant can include a water soluble salt of an anionic or cationic polymer, such as for example a homopolymer or copolymer of acrylic acid, methacrylic acid, or maleic acid, having a number average molecular weight of less than about 20,000. In one aspect, the dispersant can include a sodium polyacrylate having a number average molecular weight in the range from 1,500 to 5,000. In one aspect, the quantity of the dispersing agent used is preferably in the range from 0.1 to 2.0% by weight, based on the weight of dry calcium carbonate.

In yet another aspect, the stabilizing in (b) includes adding a thickener to the first ground calcium carbonate. The thickener can include any conventional thickener, such as, for example, a carboxymethylcellulose or other cellulose derivative, or a polymer based thickener such as a long chain polymer such as for example a homopolymer or copolymer of acrylic acid or methacrylic acid.

The transporting in (c) can include any conventional bulk transport method, such as via ship, train, or truck. In one aspect, the stabilized first calcium carbonate will be shipped in a tank if in slurry form.

In another aspect, following transport, the solids content of the first calcium carbonate is reduced prior to the further grinding in (d) by addition of an aqueous solution, e.g. water. In one aspect, the reduction of solids content and further grinding are accomplished without introduction of additional dispersant. In this case, the amount of dispersant present in the stabilized calcium carbonate slurry from (b) can be selected to allow aggregation of the particulate calcium carbonate at the reduced solids content, thereby reducing the fine particle content of the calcium carbonate product of the further grinding in (d).

In one aspect, the first ground calcium carbonate, when dried, has an ISO brightness of at least about 93, such as e.g. an ISO brightness of at least about 95.

In another aspect, the first ground calcium carbonate has a top size of less than about 50 microns. For example, the first ground calcium carbonate can contain less than about 0.1% particles having an esd larger than 45 microns. In another example, the first ground calcium carbonate can contain less than about 50 ppm particles having an esd larger than 25 microns.

In general, it is also beneficial that the first ground calcium carbonate has been ground sufficiently to liberate substantially all contaminating minerals therefrom. For example, the first ground calcium carbonate can be ground to have a particle size distribution finer than about 5% by weight of particles having an esd less than 2 microns, e.g., ranging from about 10% by weight of particles having an esd less than 2 microns.

In one aspect, the first ground calcium carbonate can have a solids content ranging from about 20% to about 80% solids, e.g., from about 20% to about 35% solids, from about 70 to about 80% solids, or from about 74 to about 78% solids.

In one aspect, the calcium carbonate feed may be ground in (a) by a conventional method, such as for example, that disclosed in EP614948. In that exemplary embodiment, raw marble in the form of chippings of maximum size about 10 mm is introduced into a dry rotary roller grinder in which grinding takes place. A current of air is forced in through a perforated base of the grinder chamber and finely ground particles that are elutriated from the grinding chamber are directed to a cyclone, where insufficiently ground particles are separated and returned to the grinding chamber while sufficiently ground particles are conveyed on to a mixing tank. Generally, particles having a diameter not greater than about 50 microns are considered to be sufficiently finely ground. Water and a solution of dispersing agent are optionally added to the mixing tank.

The calcium carbonate feed in (a) can then be subjected to attrition grinding under conditions such as to yield a product having a particle size distribution such that from about 50 to about 70% by weight of the particles have an equivalent spherical diameter smaller than 2 microns, e.g. from about 55 to about 65% by weight of the particles have an equivalent spherical diameter smaller than 2 microns, e.g. about 60% by weight of the particles have an equivalent spherical diameter smaller than 2 microns. The attrition grinding can include grinding with a particulate grinding medium with particles having an average particle diameter in the range from 0.1 to 5.0 mm, e.g. in the range of from 0.25 to 4.0 mm. The particulate grinding medium may be, for example, silica sand or granules of alumina, zirconia, zirconium silicate, aluminium silicate or the mullite-rich material which is produced by calcining kaolinitic clay at a temperature in the range from about 1300°C to about 1800°C.

The attrition grinding in (a) may be carried out in one stage or it may be carried out in two or more stages. For example, the calcium carbonate feed may be partially ground in a first attrition grinder, and then fed to a second attrition grinder for further grinding.

In one aspect, the amount of energy dissipated in the suspension during grinding in (a) may be in the range of from 100 to 400 kWh/tonne of dry calcium carbonate.

In one aspect, the first ground calcium carbonate from (a) can be further subjected to froth flotation prior to the stabilization in (b). For example, the first ground calcium carbonate can be subjected to froth flotation as generally described in EP291271.

In a first hypothetical embodiment, the grinding in (a) includes grinding the first ground calcium carbonate to a particle size of from about 10% to about 30% by weight particles having an esd less than 2 microns, and the stabilizing in (b) includes dewatering the first ground calcium carbonate to a solid or semi-solid state prior to transport. Following transport, an aqueous solution is added to decrease the solids content of the stabilized calcium carbonate to a solids content, e.g. to a solids content ranging from about 20% to about 75% prior to the further grinding.

The dewatering in (b) can occur in part as a result of heat transfer to the suspension as a result of the energy dissipated during grinding. The heat from grinding in some cases may be sufficient to increase the percentage by weight of dry alkaline earth metal compound in the suspension to greater than 80% by weight.

In the first hypothetical embodiment, the further grinding in (d) is by low solids grinding (i.e., 20% - 35% solids) and the final desired particle size distribution can be such that from about 75% to about 90% by weight particles have an esd less than 2 microns. In another aspect, the final desired particle size distribution is such that from about 10% to about 15% by weight of the particles have an esd less than 0.25 microns. In another aspect, the final desired particle size distribution is such that from about 75% to about 90% by weight particles have an esd less than 2 microns and from about 10% to about 15% by weight of the particles have an esd less than 0.25 microns. In this first hypothetical embodiment, the further grinding can impart between about 40 kWh/t and about 60 kWh/t energy to the stabilized calcium carbonate to achieve the desired particle size of about 75% to about 90% less than 2 microns.

In a second hypothetical embodiment, an aqueous solution is added to the solid or semi-solid stabilized calcium carbonate following the transport, to decrease the solids content of the stabilized calcium carbonate to a solids content ranging from about 70% to about 78% prior to the further grinding at high solids (i.e., 70% - 78% solids). In one aspect, the final desired particle size can range from about 60% to about 100% by weight particles having an esd less than 2 microns. In the second hypothetical exemplary embodiment, the further grinding can impart between about 55 kWh/t and about 320 kWh/t energy to the stabilized calcium carbonate.

More specifically, in the second hypothetical embodiment, following transport, an aqueous solution can be added to the solid or semi-solid stabilized calcium carbonate to reduce the solids content thereof to a range from about 74% solids to about 76% solids. The resultant slurry can then be further ground in (d) so as to impart from about 55 kWh/t and about 75 kWh/t energy to the stabilized calcium carbonate to achieve the desired particle size of about 60% less than 2 microns. Alternatively, the resultant slurry can instead be further ground in (d) so as to impart from about 80 kWh/t and about 100 kWh/t energy to the stabilized calcium carbonate to achieve the desired particle size of about 75% less than 2 microns. Alternatively, the resultant slurry can instead be further ground in (d) so as to impart from about 105 kWh/t and about 190 kWh/t energy to the stabilized calcium carbonate to achieve the desired particle size of about 90% less than 2 microns. Alternatively, the resultant slurry can instead be further ground in (d) so as to impart from about 215 kWh/t and about 235 kWh/t energy to the stabilized calcium carbonate to achieve the desired particle size of about 95% less than 2 microns. Alternatively, the resultant slurry can instead be further ground in (d) so as to impart from about 300 kWh/t and about 320 kWh/t energy to the stabilized calcium carbonate to achieve the desired particle size of about 99%-100% less than 2 microns.

The first and second hypothetical embodiments may each also include an optional degritting step prior to the stabilizing in (b). In one aspect, this degritting can include separating grit via conventional centrifugal separation.

In a third hypothetical embodiment, the grinding in (a) includes low solids (i.e., about 20 to about 35% solids) grinding of the first ground calcium carbonate to a particle size of from about 5% to about 10% by weight particles having an esd less than 2 microns, followed by dewatering and high solids (i.e., about 70% to about 80% solids, e.g. from about 74% to about 76% solids) grinding of the resultant calcium carbonate slurry to a particle size of from about 50% to about 70% by weight particles having an esd less than 2 microns. In this hypothetical embodiment, the stabilizing in (b) can include adding a dispersant to the first calcium carbonate slurry. In one aspect, the first calcium carbonate has a particle size ranging from about 55% to about 65% by weight particles having an esd less than 2 microns.

Following transport, an aqueous solution may be added to decrease the solids content of the stabilized calcium carbonate, e.g. to a solids content ranging from about 20% to about 35% prior to the further grinding. The diluted slurry is then subjected to low-solids grinding to achieve a calcium carbonate slurry having the desired particle size distribution that is substantially free of dispersant. In one aspect, the desired particle size can be such that from about 75% to about 90% by weight particles have an esd less than 2 microns. In another aspect, the final desired particle size distribution is from about 10% to about 15% by weight of the particles have an esd less than 0.25 microns. In another aspect, the final desired particle size distribution is such that from about 75% to about 90% by weight particles have an esd less than 2 microns and from about 10% to about 15% by weight of the particles have an esd less than 0.25 microns. In this third hypothetical embodiment, the further grinding can impart between about 40 kWh/t and about 60 kWh/t energy to the stabilized calcium carbonate to achieve the desired particle size of about 75% to about 90% less than 2 microns.

In the fourth hypothetical embodiment, the grinding in (a) and stabilization in (b) are substantially the same as in the third hypothetical embodiment. However, the further grinding in (d) is instead performed at a high solids content ranging from about 60% to about 78% by weight solids and the desired final particle size can range from about 85% less than 2 microns to about 100% less than 2 microns, e.g., from about 90% less than 2 microns to about 95% less than 2 microns. In the third hypothetical exemplary embodiment, the further grinding in (d) is sufficient to impart between about 55 kWh/t and about 240 kWh/t energy to the stabilized calcium carbonate.

More specifically, in the fourth hypothetical embodiment, the resultant slurry can then be further ground in (d) so as to impart from about 55 kWh/t and about 75 kWh/t energy to the stabilized calcium carbonate to achieve the desired particle size of about 60% less than 2 microns. Alternatively, the resultant slurry can instead be further ground in (d) so as to impart from about 80 kWh/t and about 100 kWh/t energy to the stabilized calcium carbonate to achieve the desired particle size of about 75% less than 2 microns. Alternatively, the resultant slurry can instead be further ground in (d) so as to impart from about 105 kWh/t and about 190 kWh/t energy to the stabilized calcium carbonate to achieve the desired particle size of about 90% less than 2 microns. Alternatively, the resultant slurry can instead be further ground in (d) so as to impart from about 215 kWh/t and about 235 kWh/t energy to the stabilized calcium carbonate to achieve the desired particle size of about 95% less than 2 microns. Alternatively, the resultant slurry can instead be further ground in (d) so as to impart from about 300 kWh/t and about 320 kWh/t energy to the stabilized calcium carbonate to achieve the desired particle size of about 99%-100% less than 2 microns.

Optionally, in the third and fourth exemplary embodiments above, the further grinding in (d) can include at least one distinct grinding step, and may include two or more grinding steps. Optionally, from about 10 parts to about 50 parts of a lamellar mineral can be added between two of these grinding steps. The optional lamellar mineral can include for example, talc or kaolin. In such case, the lamellar mineral is subjected to co-grinding with the calcium carbonate for at least a portion of the further grinding in (d). In this case, the co-grinding portion of (d) can instead be performed at a solids content ranging from about 50% to about 60% to achieve a desired particle size in the range of from about 75% to about 90% less than 2 microns. Alternatively, the lamellar mineral can be added post-grinding to achieve the desired solids content.

In accordance with the third and fourth hypothetical embodiments, the stabilized calcium carbonate can be degritted after the transporting in (c). Such degritting can, for example, be accomplished via conventional centrifugal separation.

According to another aspect of the present invention, there is provided an aqueous suspension of a finely ground calcium carbonate or other alkaline earth metal pigment whenever prepared by the processes of the aforementioned aspects of the present invention.

A finely ground mineral material, such as calcium carbonate, or blends with other mineral materials as discussed above, obtainable using the process of the present invention may be used to prepare paper coating or paper making compositions in manners which are known per se. Therefore, after the process of the present invention has been carried out, the finely ground calcium carbonate obtained may be formed into a paper coating composition, which is subsequently used to coat paper, or it may be formed into a paper making composition which is subsequently used to make paper in a paper making process. The present invention thus contemplates a paper coating composition comprising the ground calcium carbonate obtained in accordance with the process of the present invention, as well as a paper making composition comprising the ground calcium carbonate obtained in accordance with the process of the present invention. Further details relating to the further processing of the, for example, calcium carbonate obtained according to the present invention are set out below.

### (I) Paper products

The term paper products should be understood to mean all forms of paper, including board, card, paperboard, and the like.

The calcium carbonate produced from step (d) according to the present invention may be blended in various proportions with conventional filler materials, e.g. precipitated or ground calcium carbonate, kaolin and other clay minerals, metakaolin, talc, calcium sulphate, the ingredients and composition being selected according to the quality of the paper required to be produced. In general, these materials are likely to be in a slurry form when they are mixed.

The calcium carbonate produced from step (d) can be used in the preparation of a paper making composition or a paper coating composition. The paper making composition may typically comprise, in aqueous suspension, cellulosic fibres and other conventional additives known in the art. A typical paper making composition would typically contain up to about 67% by weight of dry filler material based on the dry weight of the paper making fibres and may also contain a cationic or an anionic retention aid in an amount in the range from 0.1 to 2% by weight, based on the dry weight of the filler material. It may also contain a sizing agent which may be, for example, a long chain alkylketene dimer, a wax emulsion or a succinic acid derivative. The composition may also contain dye and/or an optical brightening agent.

A paper coating composition may also comprise, in aqueous or non-aqueous suspension, and in addition to the calcium carbonate produced from step (d), other filler materials, a binder chosen from binders conventionally used in the art. Exemplary binders include but are not limited to adhesives derived from natural starch and synthetic binders. The formula of the paper coating composition will depend upon the purpose for which the coated paper is to be used, for example, either for offset or gravure printing. Generally speaking, the amount of adhesive will be in the range from 3 to 35% by weight of adhesive solids, based on the dry weight of the coating. There may also be present from 0.01 to 0.5% by weight, based on the dry weight of the coating, of a dispersing agent. Sufficient alkali will generally be added to raise the pH to about 8-9. The adhesive solids may be a starch, a water dispersible synthetic resin or latex such as a styrene butadiene copolymer, a polyvinyl alcohol an acrylic, polyvinyl acetate, a butadiene-acrylonitrile copolymer, a cellulose derivative such as methyl cellulose, sodium carboxymethyl cellulose or hydroxyethyl cellulose or a proteinaceous material such as casein, animal glue or a vegetable protein. Paper coatings may include the calcium carbonate in an amount ranging from about 3% to about 89% by weight on a dry coating basis.

Calendering is a well known process in which paper smoothness and gloss is improved and bulk is reduced by passing a coated paper sheet between calender nips or rollers one or more times. Usually, elastomer coated rolls are employed to give pressing of high solids compositions. An elevated temperature may be applied. One or more (e.g. up to about 12, or sometimes higher) passes through the nips may be applied. Methods of coating paper and other sheet materials, and apparatus for performing the methods, are widely published and well known. Such known methods and apparatus may conveniently be used for preparing coated paper. For example, there is a review of such methods published in Pulp and Paper International, May 1994, page 18 et seq. Sheets may be coated on the sheet forming machine, i.e., "on-machine," or "off-machine" on a coater or coating machine. Use of high solids compositions is desirable in the coating method because it leaves less water to evaporate subsequently. However, as is well known in the art, the solids level should not be so high that high viscosity and leveling problems are introduced. The methods of coating may be performed using apparatus comprising (i) an application for applying the coating composition to the material to be coated; and (ii) a metering device for ensuring that a correct level of coating composition is applied. When an excess of coating composition is applied to the applicator, the metering device is downstream of it. Alternatively, the correct amount of coating composition may be applied to the applicator by the metering device, e.g., as a film press. At the points of coating application and metering, the paper web support ranges from a backing roll, e.g., via one or two applicators, to nothing (i.e., just tension). The time the coating is in contact with the paper before the excess is finally removed is the dwell time - and this may be short, long or variable.

The coating is usually added by a coating head at a coating station. According to the quality desired, paper grades are uncoated, single coated, double coated and even triple coated. When providing more than one coat, the initial coat (precoat) may have a cheaper formulation and optionally less pigment in the coating composition. A coater that is applying a double coating, i.e. a coating on each side of the paper, will have two or four coating heads, depending on the number of sides coated by each head. Most coating heads coat only one side at a time, but some roll coaters (e.g., film press, gate roll, size press) coat both sides in one pass.

Examples of known coaters which may be employed include, without limitation, air knife coaters, blade coaters, rod coaters, bar coaters, multi-head coaters, roll coaters, roll/blade coaters, cast coaters, laboratory coaters, gravure coaters, kisscoaters, liquid application systems, reverse roll coaters, curtain coaters, spray coaters and extrusion coaters.

Water may be added to the solids comprising the coating composition to give a concentration of solids which is preferably such that, when the composition is coated onto a sheet to a desired target coating weight, the composition has a rheology which is suitable to enable the composition to be coated with a pressure (e.g. a blade pressure) of between 1 and 1.5 bar.

### (II) Inks

The calcium carbonate produced from step (d) according to the present invention is suitable for use as a pigment in aqueous inks and non-aqueous inks, including, for example, gravure inks, heat-set inks, lithographic printing inks, and newsprint inks. Depending on the final applications of the ink, the ink may further comprise at least one component chosen, for example, from resins, such as vinyl resins; polymers; additives, such as rheology modifiers, surfactants, and drying accelerating agents such as sodium lauryl sulfate, N,N-diethyl-m-toluamide, cyclohexylpyrrolidinone and butyl carbitol; fillers; diluents; humectants, such as ethylene glycol, propylene glycol, diethylene glycols, glycerine, dipropylene glycols, polyethylene glycols, polypropylene glycols, amides, ethers, carboxylic acids, esters, alcohols, organosulfides, organosulfoxides, sulfones, alcohol derivatives, carbitol, butyl carbitol, cellosolve, ether derivatives, amino alcohols, and ketones; and biocides, such as benzoates, sorbates, and isothiazolones. The ink product can further comprise at least one additional pigment chosen from those conventionally used in the art. The amount of calcium carbonate made according to the present invention in a given ink can vary greatly, based on the formulation of the ink, as would be apparent to one of ordinary skill in the art. For example, the ink can comprise from 5%-45% by weight of the calcium carbonate made according to the present invention.

### (III) Rubber products

The calcium carbonate produced from step (d) according to the present invention may be incorporated into a rubber composition. The calcium carbonate may, for example, be used as a filler or extender in the rubber composition. The composition comprising the calcium carbonate prepared according to the present invention can provide the benefits of resin extension, reinforcement and increased hardness of the rubber composition. The rubber product disclosed herein comprises at least one rubber chosen from natural rubbers and synthetic rubbers. For example, sulphur-vulcanisable rubbers, which can be used for the manufacture of tyre treads. Examples of the synthetic rubbers, which may be used in the present invention, include, but are not limited to, styrene-butadiene rubber (SBR), vinyl-styrene-butadiene rubber (VSBR), butadiene rubber (BR), and neoprene rubber or polyisoprene. The SBR may be emulsion SBR (E-SBR) or solution SBR (S-SBR). The VSBR may be solution VSBR (S-VSBR). Examples of the BR include, cis-1,3-polybutadiene rubber and cis-1,4-polybutadiene rubber. An example of the natural rubbers, which the products of the present invention can be used in, is Standard Malaysian natural rubber. The rubber products may further comprise at least one additive chosen from conventional additives used in the art, for example, extender oils and mineral and synthetic fillers. The rubber can include an amount of the calcium carbonate to about 35% by weight as formulated.

### (IV) Paints

The calcium carbonate produced from step (d) according to the present invention may be used in paints, such as an aqueous or non-aqueous industrial coating, architectural paint, matt paint, glossy paint, deco paint, or art paint. The calcium carbonate disclosed herein can serve, for example, as a gloss control agent pigment in the paint. The calcium carbonate will generally be present in an amount less than the critical pigment volume. However, the calcium carbonate made according to the present invention can also be present in higher pigment volume concentrations, such as for example in the range of 1% to 80% by weight on a dry film basis. The paint will typically further comprise at least one component chosen from binders, such as polymeric binders, for example, water dispersible binders chosen, for example, from polyvinyl alcohol (PVA) and latex; and additives conventionally used in paints, chosen, for example, from surfactants, thickeners, biocides, defoamers, wetting agents, dispersants, and coalescents. The paint may comprise at least one additional pigment chosen, for example, from TiO₂ and calcium carbonate.

### (V) Polymer products

The calcium carbonate produced from step (d) may be incorporated in polymer products and is typically present at a concentration of up to 60% by weight of the polymer as compounded and up to 30% by weight of the final polymer article. In addition to its role as a pigment, the calcium carbonate can be used both for resin extension (i.e., filling), TiO₂ extension, and reinforcement of the polymer. The polymer product comprises at least one polymer resin. The term resin means a polymeric material, either solid or liquid, prior to shaping into a plastic article. The at least one polymer resin is one which, on cooling (in the case of thermoplastic plastics) or curing (in the case of thermosetting plastics), can form a plastic material. The at least one polymer resin, can be chosen, for example, from polyolefin resins, polyamide resins, polyester resins, engineering polymers, allyl resins, thermoplastic resins, and thermoset resins.

The calcium carbonate produced from step (d) may be combined with a polymer resin to form a polymer composition from which a shaped article is subsequently formed. "Polymer resin" is the general term used in the plastics art to denote a polymeric material (solid or liquid) prior to shaping into a plastic article. In the case of thermoplastic polymers, the polymer resin is melted (or otherwise softened) prior to formation of an article usually, by a moulding process, and the polymer will not normally be subjected to any further chemical transformations. After formation of the shaped article, the polymer resin is cooled and allowed to harden. In the case of thermosetting polymers, the polymer resin is in a precursor state which, after shaping, is cured to obtain the final polymeric article. In the curing stage, chemical crosslinks are formed. The calcium carbonate is suited for use with polymer resins which are thermoplastic in nature or to polymer resins in which the resin is thermosetting.

The polymer resin composition may be made by methods which are well known in the art generally in which the calcium carbonate and the polymer resin are mixed together in suitable ratios to form a blend (so-called "compounding"). In general, the polymer resin should be in a liquid form to enable the particles of the filler to be dispersed therein. Where the polymer resin is solid at ambient temperatures, therefore, the polymer resin will need to be melted before the compounding can be accomplished. In some embodiments, the calcium carbonate may be dry blended with particles of the polymer resin, dispersion of the particles in the resin then being accomplished when the melt is obtained prior to forming an article from the melt, for example in an extruder itself.

In embodiments of the invention, the polymer resin and the calcium carbonate and, if necessary, any other optional additives, may be formed into a suitable masterbatch by the use of a suitable compounder/mixer in a manner known per se, and may be pelletized, e.g. by the use of a single screw extruder or a twin-screw extruder which forms strands which may be cut or broken into pellets. The compounder may have a single inlet for introducing the filler and the polymer together. Alternatively, separate inlets may be provided for the filler and the polymer resin. Suitable compounders are available commercially, for example from Werner & Pfleiderer. Examples of suitable additives include pigments other than those made according to the present invention, antioxidants, processing aids, light stabilisers and glass fibre.

The polymer resin compositions incorporating the calcium carbonate made according to the present invention can be processed to form, or to be incorporated in, articles of commerce in any suitable way. Such processing may include compression moulding, injection moulding, gas-assisted injection moulding, calendaring, vacuum forming, thermoforming, extrusion, blow moulding, drawing, spinning, film forming, laminating or any combination thereof. Any suitable apparatus may be used, as will be apparent to one of ordinary skill in this art.

The articles which may be formed from the polymer compositions are many and varied. Examples include films, engineering thermoplastics and PVC cables.

### (VI) Ceramics

The calcium carbonate produced from step (d) according to the present invention may be incorporated into ceramic forming compositions. Ceramic articles are generally formed from a wet high solids composition which comprises a blend of various particulate ingredients which includes kaolinitic clays, i.e. clays which contain the mineral kaolinite. Often, fluxing materials such as china stone, feldspar or nepheline syenite and at least one silica containing material such as quartz or flint are included in such compositions. For the production of bone china, the composition will also contain a substantial proportion of ground calcined animal bone. The composition may also include minor proportions of other ingredients such as calcium carbonate, dolomite and talc. The proportions of the various ingredients used in the composition will vary according to the properties in the fired ceramic article. Prior to firing the ceramic forming composition it is shaped and dried. The ceramic forming composition will need to have sufficient plasticity to enable it to be shaped and it must also possess sufficient strength in its unfired or "green" state to permit a certain amount of handling without loss of its integrity and shape.

### (VII) Barrier coatings

The calcium carbonate produced from step (d) may be incorporated into barrier coating compositions which comprise a slurry comprising the products according to the present invention. Typically, the solids content of the slurry ranges from about 45% to about 70% by wt. Barrier coatings are generally useful in imparting to paper, moisture resistance, moisture vapour resistance, and resistance to grease, oil, air and the like. The amount of binder in the barrier coating may be in the range of about 40% to 50% by wt.

### Examples

Embodiments of the present invention will now be described by way of example only, with reference to the following specific examples.

### Test Methods

### Brightness (ISO)

The ISO brightness is the percentage of light reflected by a body compared to that reflected by a perfectly reflecting diffuser measured at 457nm. A Datacolour Elrepho fitted with two tungsten lamps, a gloss shield and a range of filters which includes one at a nominal setting of 457nm and one at a nominal setting of 571nm was used.

A test surface is produced by pulverizing a dried material, for example using an Imerys pulveriser, to disperse it completely then compressing it under a pressure of 1.2kg cm⁻² to form a powder tablet. Drying is carried out in an oven and dryness of the sample is denoted by the absence of condensation on a piece of cool plate glass when placed in close proximity to the surface of the sample which has been removed from the oven. Suitable drying ovens include the forced circulation type which are capable of maintaining a temperature of 80°C to within 5°C. The reflectance values of this tablet are measured at two wavelengths in the visible spectrum. The measurements were made with the ultraviolet component excluded. The primary standard adopted was an ISO level 2 reflectance standard, supplied and calibrated by Physikalisch-Technische Bundesanstalt (P.T.B.) West Germany. A working standard, in this case a ceramic tile, was used to calibrate the photometer for brightness measurements which had been calibrated previously against the level 2 standard.

### Yellowness (YEL)

The yellowness was measured according to the procedure described above for the brightness measurements. The yellowness is reported as the value obtained when the reflectance at 457nm is subtracted from the reflectance at 571nm.

### Whiteness

The whiteness was measured according to the CIE standard codified by ISO 11475:1999 and Determination of CIE whiteness, D65/10 degrees (outdoor daylight).

### Brookfield viscosity

The Brookfield viscosities were measured at ambient temperature (22°C) using a Brookfield Viscometer set to operate at a spindle speed of 100rpm. The suspension was thoroughly mixed using a Heidolph laboratory stirrer. Immediately after mixing, the suspension was transferred to the viscometer. The viscometer spindle was immersed in the suspension. The viscometer spindle was activated 30 seconds after cessation of homogenisation and the viscosity was recorded a further 15 seconds later.

### Materials

In the following Examples, the source of calcium carbonate sample used was Carbital 60™ which is a ground calcium carbonate commercially available from Imerys. The initial particle size distribution of the sample is set out in Table 3. The starting solids content of the feed was 78.3wt%.

Carbolite™ 16/20 is a ceramic grinding media commercially available from Carboceramics.

### Example 1

A number of samples were prepared using a pilot scale media grinder. The input energy of the grinder was 25kWh/tonne. The feed material was Carbital 60™.

The Carbital 60™ was ground to prepare samples possessing a desired particle size distribution. These are referred to as C95 and C90. The C95 product refers to a ground Carbital 60™ sample which has been further ground so that about 95wt% of the ground calcium carbonate < 2µm. The C90 product refers to a ground Carbital 60™ sample which has been further ground so that about 90wt% of the ground calcium carbonate < 2µm. C95T is present for the purposes of comparison and is a standard calcium carbonate production sample which was obtained from Imerys in Tunadal. C95T was processed at the higher solids content.

The grinder was charged with the Carbolite media. The Carbital 60™ feed material was diluted with water to the required solids level prior to grinding. A closed loop system was used, where the calcium carbonate was pumped from a transi-tank into the grinder with the grinder product then pumped back via a transfer tank into the transi-tank. The flow rate into the grinder was set at approximately 6 litres/minute. Once the flow rate had been set, extra grinding media was added in order to obtain a starting grinding energy (current draw) of 30A. The energy used was then recorded every 20 minutes. Dispersant was added at a dosage (dry weight) of 0.2wt% for the C90 sample and 0.3wt% of the C95 sample, gradually throughout the grinding process.

The results are presented in Tables 1 to 4.

**Table 1**

| **Samples** | **(a)Tarqet solids content/wt% (b) Starting solids content/wt% (c) Final solids content/wt%** | **Dry weight/kg** | **Grinding time/hours** | **Current/A** |
|---|---|---|---|---|
| C95 | (a) 56 | 700 | 9.5 | ∼28 |
| | (b) 54.8 | | | |
| | (c) 55.9 | | | |
| C95 | (a) 64 | 700 | 6.5 | ∼28 |
| | (b) 65.0 | | | |
| | (c) 62.9 | | | |
| C90 | (a) 56 | 700 | 5.5 | ∼28 |
| | (b) 58.5 | | | |
| | (c) 56.1 | | | |
| C90 | (a) 64 | 700 | 4.5 | -29 |
| | (b) 66.1 | | | |
| | (c) 65.0 | | | |

**Table 2**

| **Samples** | **Target solids content/wt%** | **Brightness** | **Yellowness** | **L*** | **a*** | **b*** |
|---|---|---|---|---|---|---|
| C60 feed | | 95.2 | 0.9 | 98.4 | 0.00 | 0.53 |
| C95 | 56 | 94.9 | 0.7 | 98.2 | 0.02 | 0.43 |
| C95 | 64 | 94.8 | 0.7 | 98.2 | -0.02 | 0.40 |
| C90 | 56 | 95.5 | 1.0 | 98.5 | 0.01 | 0.61 |
| C90 | 64 | 95.1 | 0.8 | 98.3 | 0.00 | 0.48 |

**Table 3**

| **Samples** | **Solids content/wt%** | **<2µm** | **<1µm** | **<0.5µm** | **<0.25µm** | **<0.10µm** | **Steepness** |
|---|---|---|---|---|---|---|---|
| **Run No.1** | | | | | | | |
| C60 feed | | 61.6 | 39.5 | 22.5 | 11.4 | | |
| C95 | 56 | 95.1 | 78.3 | 46.7 | 23.2 | | 39 |
| C95 | 64 | 94.9 | 77.7 | 45.9 | 23.2 | | 39 |
| C95T | | 98.4 | 80.3 | 50.9 | 30.3 | | 32 |
| C90 | 56 | 91.2 | 69.0 | 38.9 | 18.6 | | 38 |
| C90 | 64 | 88.7 | 65.4 | 36.9 | 19.0 | | 36 |
| C90T | | 90.3 | 62.5 | 38.2 | 21.7 | | 32 |

| **Run No. 2** | | | | | | | |
|---|---|---|---|---|---|---|---|
| C95 | 56 | 95.3 | 77.5 | 45.1 | 21.5 | 11.9 | 41 |
| C95 | 64 | 94.7 | 76.6 | 44.4 | 22.4 | 11.2 | 39 |
| C95T | | | | | | | |
| C90 | 56 | 90.7 | 67.3 | 36.4 | 16.4 | 8.5 | 40 |
| C90 | 64 | 88.2 | 64.1 | 35 | 16.8 | 7.6 | 38 |
| C90T | | | | | | | |

A sample of the C95 product at 64wt% solids was mixed with the commercially available dispersant Capim DG in a ratio of 45 parts of C95 to 55 parts of the dispersant. The target solids was 68wt%. In order to maintain a fluid slurry an amount of water was added. The slurry blend was measured for solids, pH and viscosity, then diluted and remeasured. Table 4 indicates that even when the target solids is significantly exceeded, the viscosity was still acceptable. "Makedown" refers to the measurements made before the final dilution.

**Table 4**

| **Sample** | **Solids/wt%** | **pH** | **Brookfield Viscosity/ mPa.s** |
|---|---|---|---|
| Makedown | 73.3 | 8.1 | 600 |
| Dilution (1) | 71.3 | 8.2 | 200 |
| Dilution (2) | 69.2 | 8.2 | 100 |

The results indicate, *inter alia,* that slurries comprising steeper samples can be produced according to the present invention, though still possessing similar values of particle size of <2µm, compared to products made according to conventional methods.

Particle sizes of the ground carbonate referred to herein may be measured using the well known Sedigraph apparatus. The particulate material is in a fully dispersed condition and measured using a Sedigraph 5100 machine as supplied by Micromeritics Instruments Corporation, Norcross, Georgia, USA (telephone: +1 770 662 3620; web-site: www.micromeritics.com), referred to herein as a "Micromeritics Sedigraph 5100 unit".

Unless otherwise stated herein, particle size distributions refer to the weight percent of particles smaller (or larger, as the case may be) than a particular dimension.

Unless otherwise indicated, all numbers expressing quantities of ingredients, reaction conditions, and so forth used in the specification and claims are to be understood as being modified in all instances by the term "about." Accordingly, unless indicated to the contrary, the numerical parameters set forth in the following specification and attached claims are approximations that may vary depending upon the desired properties sought to be obtained by the present invention.

Other embodiments of the invention will be apparent to those skilled in the art from consideration of the specification and practice of the invention disclosed herein. It is intended that the specification and examples be considered as exemplary only, with a true scope and spirit of the invention being indicated by the following claims.

## Claims

1. A method for producing particulate mineral materials having a desired particle size distribution, comprising:
(a) processing at a first location a source of the mineral materials, wherein the mineral material is processed by grinding in step (a) to produce a first processed mineral suspension having a particle size distribution ranging from about 5% less than 2 microns to about 75% less than 2 microns;
(b) stabilizing the first processed mineral suspension by dewatering the first processed mineral suspension to a solid state or semi-solid-state processed mineral;
(c) transporting portions of the solid state or semi-solid-state processed mineral to a plurality of different second locations; and
(d) optionally, further processing portions of the solid state or semi-solid-state processed mineral at the plurality of different second locations by one or more of the following steps: (i) further grinding in one or more grinding steps, (ii) blending of an additional inorganic material or (iii) chemical treatment.

2. A method according to claim 1 wherein the mineral material is processed in step (d) by grinding.

3. A method according to claim 1, wherein the mineral material is processed in step (d) by chemical treatment.

4. A method according to claim 1, wherein the mineral material is processed in step (d) by blending with another mineral material.

5. A method according to claim 4, wherein the other mineral material is the same as the mineral material which has been subjected to processing in step (a) but has a different particle size distribution.

6. A method according to any one of claims 4 or 5, wherein the additional mineral material is co-ground in step (d).

7. A method according to any one of claims 4 or 5, wherein the additional mineral material is added after further grinding in step (d).

8. A method according to any one of claims 1 to 7, wherein the mineral material subjected to processing in step (a) is an alkaline earth metal carbonate.

9. Use of a processed mineral having a desired particle size distribution obtained according to any one of claims 1 to 8 in any one of a paper product, an ink composition, a rubber composition, a paint composition, a polymer composition, a ceramic composition, or a barrier coating.

10. Use according to claim 9, wherein the processed mineral having the desired particle size distribution is formed into a paper coating composition or is used as a filler in a paper making process.

11. Use according to claim 9, wherein the processed mineral having the desired particle size distribution is formed into a paper coating composition and the coating composition is used to coat paper.

12. Use according to claim 9, wherein the processed mineral having the desired particle size distribution is formed into a ceramic composition and the ceramic composition is shaped, dried and fired and formed into an article.

13. Use according to claim 9, wherein the processed mineral having the desired particle size distribution is formed into a polymer composition and the polymer composition is formed into an article.

14. Use according to claim 9, wherein the processed mineral having the desired particle size distribution is formed into a paint composition which is used as a coating.

15. A method according to any one of claims 1 to 8, wherein following (d) a portion of processed mineral has a particle size distribution such that from 75wt% to 90wt% of particles have an equivalent spherical diameter (esd) less than 2µm.

16. Use according to claim 10 wherein the use is as a filler in a paper-making process wherein the mineral material is processed in step (d) of claim 1 by grinding with cellulosic fibres.

17. The method according to any one of claims 1 to 8, wherein stabilizing in step (b) of claim 1 comprises adding a thickener including a cellulose derivative.

18. The method according to any one of claims 1 to 8, wherein the first ground mineral material has a particle size distribution of about 10% to about 30% by weight particles having an esd less than 2 microns.

19. The method according to any one of claims 1 to 8, wherein the first ground mineral material of step (a) has a solids content ranging from about 20% to about 78% solids.

20. The method according to any one of claims 1 to 8, wherein the dewatering step (b) results in a solids content of from about 70% to about 80% by weight solids.
